# EUROPEAN PATENT SPECIFICATION

(11) **EP 0 470 902 B1**
(45) Date of publication and mention of the grant of the patent: **31.01.1996**
(21) Application number: 91402188.6
(22) Date of filing: 05.08.1991
(51) Int. Cl.: F16L 13/00, F16L 21/00, F16L 25/00, F16B 4/00

(54) **Liner for pipe joint by use of shape memory alloy**
Büchse zur Rohrverbindung in Anwendung als Memory-Legierungsform
Boîte pour jonction de tuyaux en usage d'une forme d'alliage à mémoire

(30) Priority: 06.08.1990 JP 207739/90; 06.08.1990 JP 207740/90
(43) Date of publication of application: 12.02.1992
(73) Proprietor: THE FURUKAWA ELECTRIC CO., LTD., Tokyo 163 (JP)
(72) Inventor: Horikawa, Hiroshi, Asahi-ku, Nakakibogaoka 11-3-102 (JP); Tuzuki, Yoshikazu, Asahi-ku, Nakakibogaoka 11-3-106 (JP); Mogi, Hisashi, Asahi-ku, Nakakibogaoka 11-3-306 (JP); Matsubara, Kazuo, Mitsuzawa, Nishi Tyo 1-3-25 (JP)
(74) Representative: Moncheny, Michel

(56) References cited:
- EP-A- 0 279 657
- EP-A- 0 412 208
- GB-A- 1 518 788
- GB-A- 1 580 036
- JP-A- 5 093 847
- US-A- 4 226 448
- US-A- 4 379 575

## Description

This invention, in general, relates to a liner for pipe joints by using shape memory alloys as fixing means, and more particularly to a liner of pipe joints for connecting pipes mutually by inserting a liner formed in a sleeve shape with an inner diameter slightly larger than the outer diameters of two pipes to be connected into the internal portion of a heat-shrinkable cylinder molded in a cylindrical form by its shape memory alloy, inserting the mutual ends of two pipes into the liner, heating the heat-shrinkable cylinder and compressing the liner from an external direction by the contraction force due to the shape recovery.

In addition, the present invention relates to a liner for pipe joints suitable for being used at the places where the safety and reliability at a high level are required in such pipe joints (e.g., pipe joints while the pipes are arranged in various kinds of nuclear power plants or various kinds of chemical plants).

The pipe joints with this type of structure have been disclosed in Japanese Patent Laid-open No. 50-93847 (U.S. Patents Nos. 4,951,978; 4,836,586; 4,469,357; 4,455,041; 4,379,575, and 4,296,955).

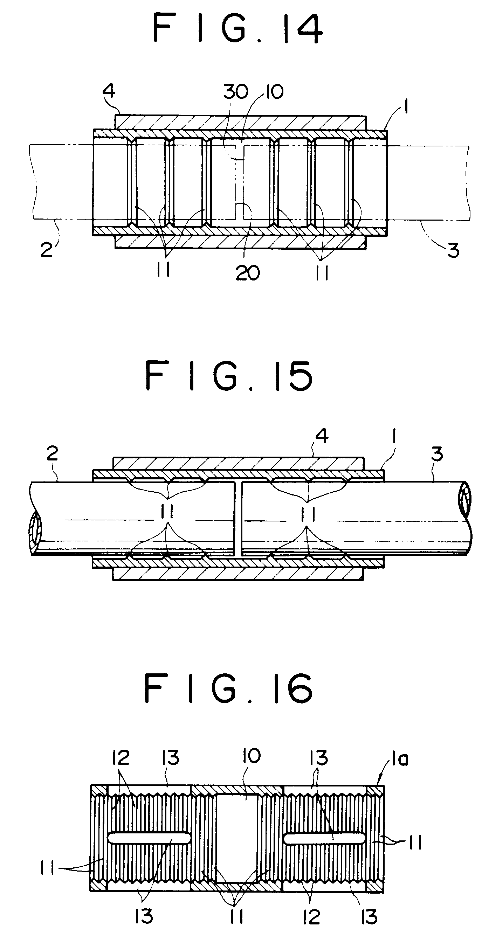

Of all the pipe joints disclosed in this Japanese Patent Laid-open No. 50-93847, the most relative ones as a prior art of this invention are selected and described in Figs. 14 through 16.

Figs. 14 and 15 show one of these pipe joints. Fig. 14 shows the condition before the pipes are mutually connected, and Fig. 15 shows the condition when the pipes are being mutually connected, respectively.

In the drawings, reference numeral 1 indicates a liner formed in a sleeve shape and made of stainless steel and other metals, and its inner diameter is provided slightly smaller than the outer diameter of two pipes 2, 3 having the same diameter to be connected with each other. On the internal surface of this liner 1, projections 11 with their same height continuing in an external direction are formed at the portion closer to both ends excluding the center portion 10 in a longitudinal direction.

Reference numeral 4 indicates a heat-shrinkable cylinder molded in a cylindrical form by a shape memory alloy for enabling its inner diameter to become slightly larger than the outer diameter of the liner 1, it is added with an elongation strain in an external direction at room temperature, and it is produced so as to contract in the direction where its diameter shrinks when heated up to the shape recovery end temperature.

When the pipes 2, 3 are mutually connected, the liner 1 is inserted into the heat-shrinkable cylinder 4 as shown in Fig. 14, and the end portions of the pipes 2, 3 are inserted into the liner 1 so as to allow the mutual end portions 20, 30 of the pipes 2, 3 to meet with each other at the center portion 10 of the liner 1, as shown by chain double-dashed line in the figure. Then, the heat-shrinkable cylinder 4 is heated up to its shape recovery end temperature in this condition. Due to this heating process, the heat-shrinkable cylinder 4 shrinks to recover the memorized shape, and the projections 11 on the internal surface of the liner 1 slightly cut into the external surfaces of the pipes 2, 3 by compressing the liner 1 from an external direction as shown in Fig. 15, so that this portion may be sealed and the two pipes 2, 3 may be connected with each other.

As a plurality of projections 11 continuing in an external direction are formed on the internal surface, the liner 1 in this conventional pipe joint is strong to the tension and the compressive force along the axial directions of the pipes 2, 3. There is, however, a weak point to the force in the torsional directions of the pipes 2, 3 (rotational direction).

Fig. 16 shows another liner for pipe joints described in the preceding gazette, and both a number of projections 11 having their same height and continuing in their external direction to both side portions except the center portion 10 in their longitudinal directions and a number of projections 12 discontinuing by a plurality of slits 13 formed at the positions closer to both end portions along their longitudinal directions are formed on the internal surface of the liner 1a formed in a sleeve shape and made of metal.

The liner 1a in Fig. 16 forms a slit 13 and weakens this portion so as to allow a portion of the liner 1a to be brought into contact with the pipes even by a small pressed force, when the liner 1a is pressed from the external direction by shrinking the heat-shrinkable cylinder for connecting the pipes mutually. In case of connecting the pipes with each other by using this liner 1a in a similar manner with that in Fig. 15, as the projections 12 discontinuing by the slits 13 are cut slightly into the surfaces of the pipes to be connected, and the end portion of each projection 12 receives the forces in the torsional directions (rotational directions) of the two pipes hung by the surfaces of the pipes, this liner 1a becomes slightly stronger against the forces in the torsional directions of the two pipes connected.

However, in case one of the connected pipes receives a strongly torsional directional force, the portions close to both end portions of the liner 1a become weakened by the formation of the slits 13 and are, therefore, inclined to deform in the torsional direction. The liner 1a is also inclined to deform when the slits 13 are formed by cutting, and it was difficult to produce the liners 1a with a high accuracy in any sectional roundness.

The object of the present invention is to provide a liner that can strongly receive not only a force applied in the axial direction of the connected pipes but also that applied in the torsional direction thereof and has more safety and higher reliability, in the liners for pipe joints employing a heat-shrinkable cylinder made of shape memory alloys.

Another object of the present invention is also to provide a liner whose roundness in cross section can be produced with higher accuracy and simultaneously which is hard in deforming in a torsional direction, in the liners for pipe joints employing a heat-shirinkable cylinder made of shape memory alloys.

According to the present invention for attaining the above-mentioned objects, there is provided a liner for pipe joints using a shape memory alloy, according to claim 1.

Optional features of the invention are disclosed in claims 2-8.

It is preferable that the second projections of the liner for pipe joints according to the present invention are a plurality of projected strips discontinuing along an external direction, a plurality of projected strips placing side by side along an axial direction at an arbitrary interval, a plurality of projected strips placing side by side at an arbitrary interval at a predetermined torsional angle to an axis or a number of projections dotted at least along an external direction.

In case the second projections are a plurality of projected strips placing side by side at an arbitrary interval at a predetermined torsional angle to an axis, it is preferable that the projected strips positioning closer to one end portion and those positioning closer to the other end portion are formed by reversing the torsional direction to the axis.

Each of the preceding liners according to the present invention is made of the same metal as a raw material with that as a pipe material to be connected so as to prevent the corrosion due to the electric potential difference between the connected pipe and each liner.

Each liner according to the present invention is used for mutually connecting the pipes with their slightly smaller outer diameter than the circle diameter defined by the tip portions of the first projections.

In case of connecting the pipes mutually using each liner according to the present invention as above-mentioned, after the liner is inserted into the internal portion of the heat-shrinkable cylinder made of a thermal shrinkage type of shape memory alloys, the end portions of the pipes to be connected to the inside of the liner are inserted from both ends of the liner, the end portion to be connected mutually with the pipes is placed at the center of the liner, and in this condition, the heat-shrinkable cylinder is heated upto the shape recovery end temperature (austenite transformation end temperature) of the shape memory alloy as a raw material.

The heat-shrinkable cylinder is shrunken in the direction that the diameter thereof becomes smaller when it heated as above-mentioned, and therefore, by pushing the liner against the connection portion between the mutual pipes from the external direction, the respective tip portions of the first and second projections in the internal portions of the liner are cut into the surfaces of their mutual pipes to connect the pipes mutually.

In the condition for mutually connecting the pipes, the first projections in the internal portion of the liner being cut into the surfaces of the mutually connected portions seal the mutually pipe-connected portions and receive the force in the axial direction of the two pipes. The second projections in the internal portions of the liner being cut into the surfaces of the mutual pipes receive the force in the torsional and axial directions of the two connected pipes.

In this manner, the connected portion of two pipes is reinforced more against the forces in the axial and torsional directions of these pipes by the first and second projections in the liner.

In the liner according to the present invention, even though any forces in a torsional direction are applied on either of the connected pipes, the liner itself is never easily deformed in a torsional direction and can be produced with high accuracy in roundness thereof, since the external wall of the sleeve is compactly continuing.

The foregoing features of the invention will become apparent from the following description of preferred embodiments of the invention with reference to the acompanying drawings, in which:
Fig. 1 is a cross-sectional view showing the condition before mutually connecting pipes as one embodiment of the liner for pipe joints according to the present invention;
Fig. 2 is a cross-sectional view showing the mutually connected condition of pipes using the liner of Fig. 1;
Fig. 3 is an enlarged-scale cross-sectional view taken in the direction of the arrows along the line A-A of Fig. 2;
Fig. 4 is a cross-sectional view of another embodiment of the liner for pipe joints according to the present invention;
Fig 5 is a side view of the liner of Fig. 4;
Fig. 6 is a cross-sectional view of a further embodiment of the liner for pipe joints according to the present invention;
Fig. 7 is a cross-sectional view taken in the direction of the arrows along the line B-B of Fig. 6;
Fig. 8 is a cross-sectional view of a still further embodiment of the liner for pipe joints according to the present invention;
Fig. 9 is a side view of a still further embodiment of the liner for pipe joints according to the present invention;
Fig. 10 is a development taken in the direction of the arrows along the line C-C of Fig. 9;
Fig. 11 is a cross-sectional view of a yet further embodiment of the liner for pipe joints according to the present invention;
Fig. 12 is a partially half-cutaway view in cross section showing a modification of the liner for pipe joints of Fig. 11;
Fig. 13 is a partially half-cutaway view in cross section showing an alternative modification of the liner for pipe joints of Fig. 11;
Fig. 14 shows a prior art liner for pipe joints and is a cross sectional view showing the condition prior to the mutual connection of pipes;
Fig. 15 is a cross-sectional view showing the condition when pipes are mutually connected using the liner for pipe joints of Fig. 14; and
Fig. 16 is a cross-sectional view showing another prior art liner for pipe joints.

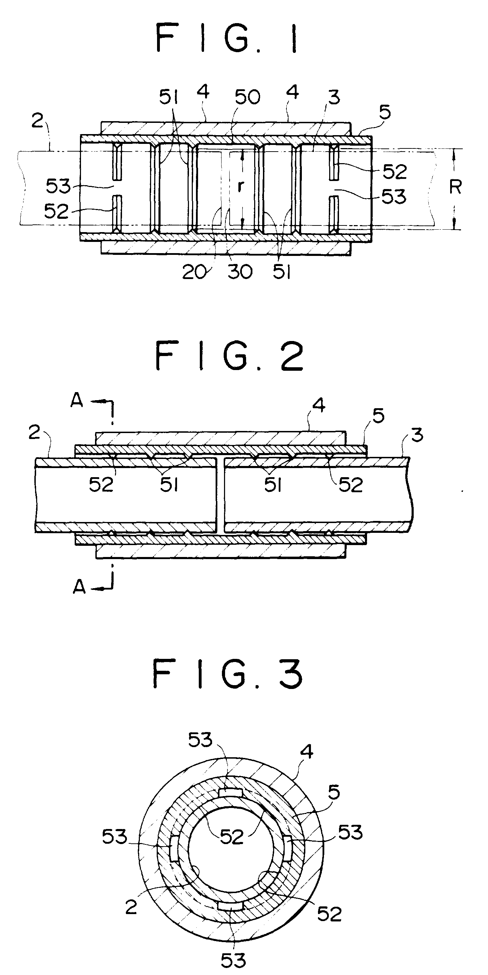

Figs. 1 through 3 show a liner for pipe joints as a preferred embodiment of the present invention.

A liner 5 is formed in a sleeve shape and made of stainless steel SUS 304 whose material is same as that of pipes 2, 3 to be connected. The stainless steel SUS 304 is a Kind of stainless steel marked by the Japanese Industrial Standard. It is an alloy of Fe with 18-20% Cr and 8.00-10.50% Ni. On the internal surface of this liner 5, first projections (projected strips) 51, 51 with their same height continue along an external direction to their both sides except a center portion 50 in a longitudinal direction and are formed in a ring shape, respectively. Furthermore, second projections (projected strips) 52, 52 discontinued by way of four cut-out portions 53 formed at a uniform interval along their external directions are formed at the positions closer to both end portions than this first projection 51, respectively. The first projection 51 and the second projection 52 of the liner 5 in this preferred embodiment are formed by cutting, respectively.

The diameter R of a circle formed by mutually connecting the tip portions of the second projections 52 in the liner 5 is formed approximately in a same manner as the diameter r of a circle formed by the tip portions of the first projections 51. This diameter R is not formed in similar to the diameter r, but R can be slightly larger than r (e.g., less than 3% of r).

When the pipes 2, 3 are mutually connected, the liner 5 is inserted into the internal portion of a heat-shrinkable cylinder 4 molded in a cylindrical form and made of a thermal shrinkage type of shape memory alloy, and further, the pipes 2, 3 are inserted into the liner 5 from both ends of liner 5. Then, the heat-shirinkable cylinder 4 is heated up to its shape recovery end temperature, by keeping the condition that the end portions 20, 30 of the pipes 2, 3 mutually approach or meet with each other at a portion of the center portion 50 in the liner 5. When the heat-shrinkable cylinder 4 recovers in a memorized shape by heating the heat-shrinkable cylinder 4, as shown in Fig. 2, the liner 5 is strongly pushed by the shape recovery force against the external part of the portion where the pipes 2, 3 should connect to each other from the external direction, and the respective tip portions of each first projection 51 and each second projection 52 come into the condition to be cut into the surfaces of the pipes 2, 3, resulting in the mutual connection between the pipes 2, 3.

When the pipes 2, 3 are mutually connected in the condition shown in Figs. 2 and 3 by using this liner 5, the connection portion and the external portion are firmly sealed and reinforced against the external force in the axial directions of the pipes 2, 3, since the tip portion of each first projection 51 is cut into the surfaces of the pipes 2, 3. They are reinforced against the external force in the torsional direction of the pipes 2, 3 since the external wall of the liner 5 continues compactly, the tip portion of each second projection 52 is cut into the surfaces of the pipes 2, 3, and the end portion of each projection 52 is hung in the rotational direction of the pipes 2, 3.

In addition, since the external wall continues compactly as above-mentioned, it is hard to deform the liner 5 against the external force in a torsional direction, and at the same time it becomes easy to produce the liner with high accuracy in cross sectional roundness.

Both the heating temperature necessary for recovering the shape in the condition shrinking the heat-shrinkable cylinder 4 and the temperature range for maintaining the shape recovery force are freely set depending on the options of both the alloy compositions and the processing conditions when the heat-shrinkable cylinder 4 is produced.

For instance, the heat-shrinkable cylinder 4 used in the preceding preferred embodiment adopts an alloy Ni-Ti-Nb which is processed so as to have a thickness of 10 mm, an elongation stress of 4% through 8% in an external direction at room temperature, and a shape recovery temperature of 100°C for enabling to keet its shape recovery force down to -40°C.

With reference to the preceding preferred embodiment, the liner 5 is formed so that the thickness may be 2 mm, the heights of the projections 51, 52 from the internal surface may be 0.5 mm, and the diameter r of a circle formed by the tip portion of each projections 51 and the diameter R of a circle binding the tip portion of each projection 52 may be 36 mm, respectively. The norminal diameter 1B (outer diameter 34 mm) is used for the connected pipes 2, 3.

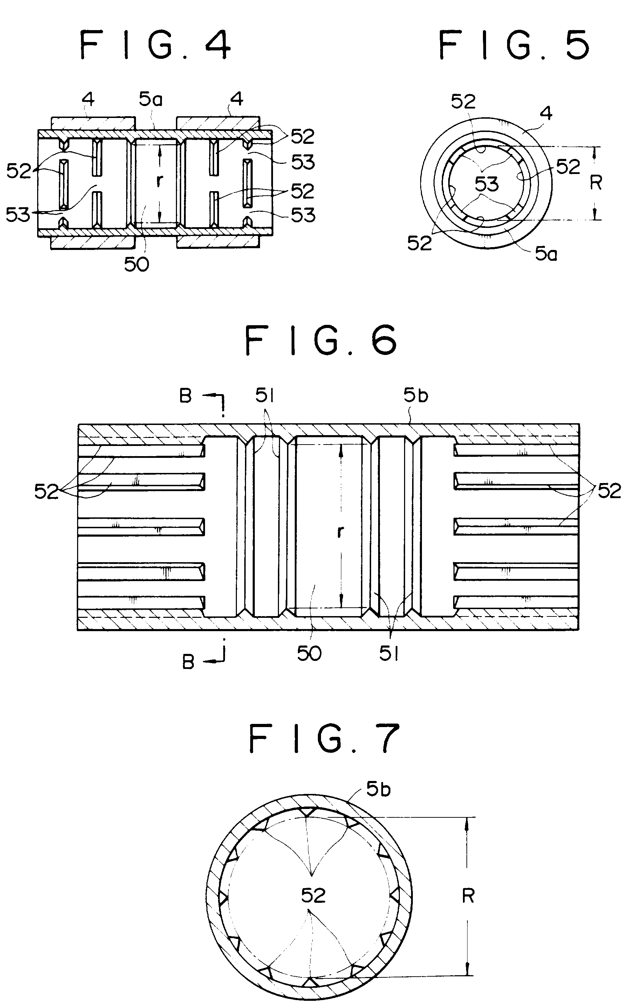

Figs. 4 and 5 show a modification of a liner in the condition that the projections are inserted into two heat-shrinkable cylinders 4. On the internal surface of a liner 5a, a strip of the first projection (projected strip) 51 is formed on each side except the center portion 50, and the second projection (projected strip) 52 discontinuing by way of each cut-out portion 53 is formed at the position closer to both sides than each projection 51 and each every two rows along their external directions, respectively. In two second projections 52, 52 at both sides of this liner 5a, the position of the cut-out portion 53 is deviated at an equal interval.

The size and the material of each portion in this liner 5a are same as those in the preferred embodiment shown in Figs. 1 through 3, and since the operations and advantages are also almost same as those in the liner 5, their detailed description is omitted.

Figs. 6 and 7 show another preferred embodiment of the liner according to the present invention.

A liner 5b is formed in a sleeve shape so as to continue its external wall compactly and made of the metal similar to that of the liner 5 in Fig. 1. On the internal surface of the liner 5b, two each of the first projections (projected strips) 51 continuing along an external direction are formed on its both sides except the center portion 50, and two each of the second projections (projected strips) 52 discontinuing by way of each cut-out portion 53 are formed in two rows each along its external direction at the position closer to both end portions than this each projection 51. The twelve pieces of the second projection 52 having a predetermined length along an axial direction at the positions closer to both end portions than those of the first projections 51 are formed at a certain interval. This can be practiced even if the mutual interval between these projections 52, 52 is not constant, and each projection 52 may be discontinued if only the projection 52 is kept along its axial direction.

The diameter R of a circle mutually connecting the tip portion of each second projection 52 in the liner 5b along an external direction is formed in similar to the diameter r of a circle formed from the tip portion of each first projection 51.

In case of connecting the pipes mutually by using this liner 5b together with the heat-shrinkable cylinder 4 at the same time in similar to the liner 5 in Figs. 1 through 5, the respective tip portions of each first projection 51 and each second projection 52 cut into the surfaces of the pipes to be connected, each projection 51 and each projection 52 receive the external force in an axial direction to the pipes, and each projection 52 receives mainly the external force in a torsional direction to the pipes. As a result, the liner 5b is reinforced against the force in the axial direction and in the torsional direction.

The size in each portion of this liner 5b is same as that in each portion of the liner 5 in Fig. 1. Other constitution and operations are same as those of the liner 5 in Fig. 1, and therefore, their detailed description is omitted.

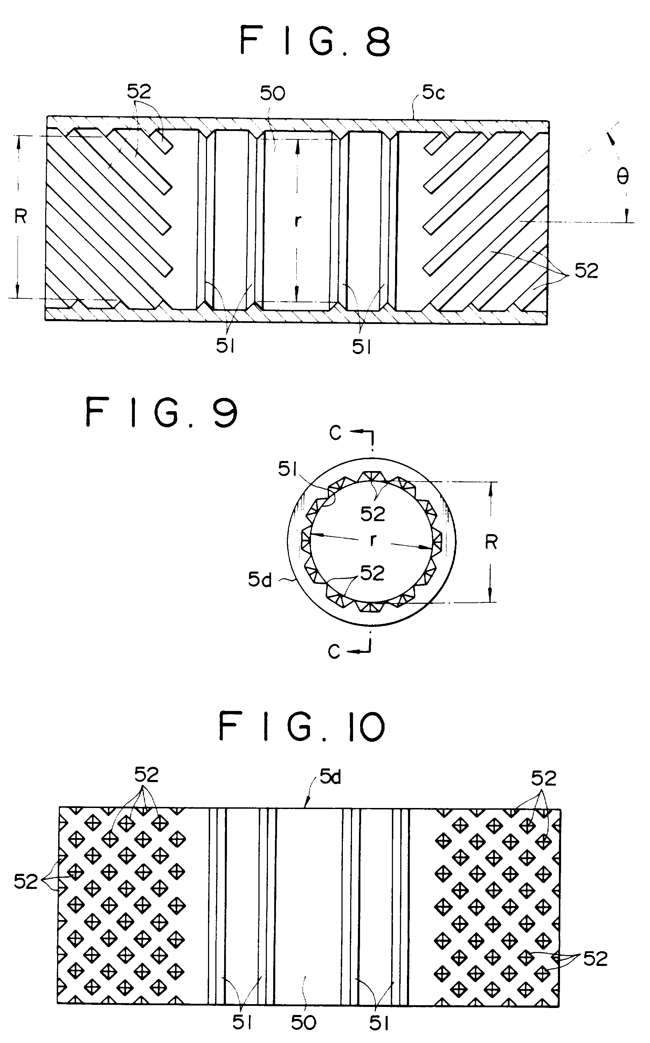

Fig. 8 shows a further preferred embodiment of the liner 5 in the present invention.

Similarly to the liner 5b in Fig. 6, on the internal surface of a liner 5c in this embodiment, the first projections (projected strips) 51, 51 are formed at both sides of the center portion 50 in a longitudinal direction, and a plurality of second projections (projected strips) 52 inclined at a torsional angle θ of approximately 45° to an axis are formed at the position closer to both end portions than these projections 51, respectively. The second projections 52, 52 positioning at the left and right sides of the first projection 51 may be mutually good even though the torsional angle θ to the axis is in the same direction, but in this embodiment, the projections 52, 52 locating at the left and right positions reverse the respective torsional directions.

The diameter r of a circle formed by the tip portion of each first projection 51 in the liner 5c is formed in almost similar to the diameter R of a circle correcting the tip portion of each second projection 52 in an external direction.

In case of mutually connecting the pipes by using this liner 5c together with the heat-shrinkable cylinder 4 in similar to the liner 5 in Figs. 1 and 5, the tip portions of each first projection 51 and each second projection 52 cut into the surfaces of the pipes to be connected, each projection 51 and each projection 52 mainly receive the external force in an axial direction to the pipes, and each projection 52 receives mainly the external force in a torsional direction to the pipes. As a result, the liner 5c is reinforced against the forces in the axial and torsional directions.

The size and the raw material in each portion of this liner 5c and other constitution are same as those of the liner 5 shown in Fig. 1, and therefore, their detailed description is omitted.

Figs. 9 and 10 show a still further embodiment of the liner in the present invention.

With reference to a liner 5d in this embodiment, on the internal surface of the liner, the first projections (projected strips) 51, 51 are formed at both sides of the center portion 50 in a longitudinal direction in similar to the liner 5b shown in Fig. 6, and a number of the second projections 52 are formed at the position closer to both end portions than these projections 51 in their dotted condition along at least their external directions. The diameter R of a circle mutually binding the corner portion of each second projection 52 along the external direction is formed in almost same as the diameter r of a circle formed by the corner portion of each first projection 51.

In case of mutually connecting the pipes by using this liner 5d together with the heat-shrinkable cylinder 4 similarly to the liner 5 in Figs. 1 and 5, the tip portions of each first projection 51 and each second projection 52 cut into the surfaces of the pipes to be connected, each projection 51 and each projection 52 receive mainly the external force in an axial direction to the pipes, and each projection 52 receives mainly the external force in a torsional direction to the pipes. As a result, the liner 5d is reinforced against the forces both in the axial and torsional directions.

The size and the raw material in each portion of this liner 5d and other constitution are same as those of the liner 5 shown in Fig. 1, and therefore, their detailed description is omitted.

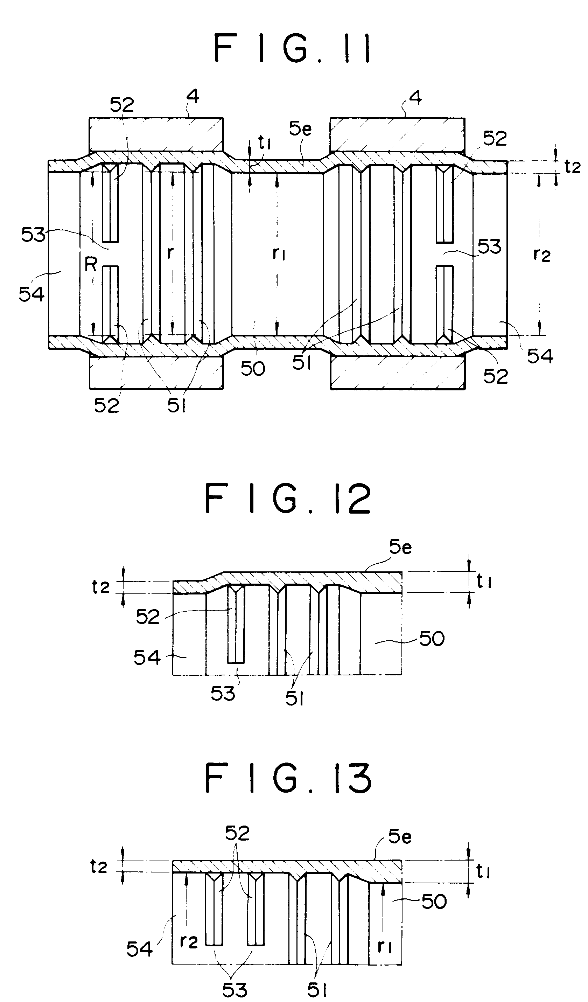

A liner 5e shown in Fig. 11 is formed in a sleeve shape and made of a raw material similar to that of the pipes to be connected. Almost in similar to the liner in Fig. 5, on the internal surface of the liner 5e, the first projections (projected strips) 51, 51 with their same height and continuing along an external direction to both sides of the center portion 50 in a longitudinal direction are formed in a ring-like shape, respectively, and further, the second projections (projected strips) 52, 52 discontinuing by way of four cut-out portions 53 formed at an equal interval along an external direction are formed at the position closer to both end portions than the first projection 51, respectively.

In addition, the inner diameter rl of the center portion 50 in a longitudinal direction and the inner diameter r2 of both portions 54 are smaller than those of other portions, and become slightly smaller than the diameter r of a circle formed by the tip portion of each projection 51 and the diameter R of a circle connecting the tip portion of each projection 52 in an external direction. A thickness t1 at the center portion 50 and another thickness t2 at another portion are formed in similar to each other.

With reference to this liner 5e, as the inner diameter r1 of the center portion 50 is slightly smaller than the diameter r of the circle formed by the tip portion of each projection 51 and the diameter R of the circle binding the corner portion of each projection 52, when the unshown pipes to be connected are inserted into the liner 5e, the pipes to be connected hardly come into contact with each projection 51 or 52. Therefore, in advance of mutually connecting the pipes, there are less chances in scratching and deforming the tip portions of the projections 51 and 52. Moreover, when the pipes are mutually connected, it is not necessary to compress the center portion 50 in a longitudinal direction and both end portions 54 in case of using the liner 5e. As a result, the pipes may be mutually connected by using separated thermal shrinkable cylinders 4 only for the portion except the center portion 50 and both end portions 54 and it is easy to save the material for the thermal shinkable cylinder 4.

This liner 5e can be practiced even though the thickness t1 of the center portion 50 is made larger than the thickness t2 of another portion as shown in Figs. 12 and 13, and it can be also practiced even by setting the inner diameter r2 of both end portions 54 larger than the inner diameter r1 of the center portion 50, as shown in Fig. 13.

Furthermore, the liner 5e in this embodiment can be practiced even by forming the projection 52, as shown in Fig. 6, 8 or 9.

Other constitution and operations in this liner 5e are almost same as those in the liner 5 shown in Fig. 1, and therefore, their detailed description is omitted.

The liner 5 in Fig. 1, the liner 5a in Fig. 4, the liner 5b in Fig. 6, the liner 5c in Fig. 8, the liner 5d in Figs. 9 and 10, and another liner 1 (comparative) in Fig. 14 were prepared for test by using all the same raw material and in all their same size, and the pipes were mutually connected by the resulting liners and by using the thermal shrinkable cylinder 4 explained according to Figs. 1 through 3 and the pipes 2, 3 and on the basis of the sizes explained in the same figures. An anti-torsion strength test was done by applying a torsional force in a circumferential direction for these respective connected pipes, and the results thus obtained are given in Table 1.

Furthermore, the anti-torsional strength ratios shown in Table 1 are numericals obtained by taking the anti-torsional strength of a comparative example as a unit.

**Table 1**

| Sample | Anti-torsional strength ratio |
|---|---|
| Liner 5 | 1.7 |
| Liner 5a | 2.8 |
| Liner 5b | 4.5 |
| Liner 5c | 4.5 |
| Liner 5d | 4.8 |
| Comparative Example | 1 |

As known clearly from this comparison test, all the lines for pipe joints in each preferred embodiment of the present invention are remarkably reinforced not only against the external force in the axial direction of the connected pipes but also against the external force in the torsional direction.

## Claims

1. A liner for pipe joints using a shape memory alloy, of the type comprising :
an external wall formed in a sleeve shape and of metal so as to be continuous; and
a plurality of projections continuing along an axially outward direction to both ends except in the center portion (50) formed on the internal surface of said external wall;
said plurality of projections comprising a plurality of first projections (51) which are continuous in a peripheral direction, characterized in that
said plurality of projections comprises a plurality of second projections (52), having discontinuities in said peripheral direction and placed side by side in said axially outward direction at a predetermined interval, said second projections being formed in an arbitrary cross section and in positions closer to both end portions than said first projections (51); and
the diameter R of a circle connecting the mutual tip portions of said second projections (52) along said peripheral direction is set so as to be either equal with or slightly larger than the diameter r of a circle formed by the tip portions of said first projections (51).

2. A liner for pipe joints according to claim 1, wherein said second projections (52) are projected strips discontinuing at an arbitrary interval along said peripheral direction.

3. A liner for pipe joints according to claim 1, wherein said second projections (52) ) are a plurality of projected strips placed side by side at an arbitrary interval and extending along an axial direction.

4. A liner for pipe joints according to claim 1, wherein said second projections (52) are a plurality of projected strips placed side by side at an arbitrary interval at a predetermined angle to an axis.

5. A liner for pipe joints according to claim 1, wherein said second projections (52) are a large number of projections dotted at least along an outward direction.

6. A liner for pipe joints according to claim 1, wherein the pipes (2, 3) to be connected are made of the same material.

7. A liner for pipe joints according to claim , wherein the inner diameter r1 of the center portion of the liner in a longitudinal direction is set to be slightly smaller than the diameter r of a circle formed by the tip portions of the first, projections (51) and the diameter R of a circle connecting the tip portions of the second projections (52) along said peripheral direction.

8. A liner for pipe joints according to claim 4, wherein the second projection (52) formed at one end portion and the second projection (52) formed at the other end portion are made in reverse angled direction relative to the axial direction.

## Patentansprüche

1. Auskleidung für Rohrverbindungen unter Verwendung einer Memorymetall-Legierung des Typs mit:
einer Außenwand, die in Form einer Hülse und aus Metall gebildet ist, so daß sie zusammenhängend ist; und mit
einer Anzahl von Vorsprüngen, die sich entlang einer axialen äußeren Richtung zu beiden Seiten mit Ausnahme des Mittelabschnitts (50) fortsetzen, und die auf der Innenfläche der Außenwand gebildet sind;
wobei die Anzahl von Vorsprüngen eine Anzahl erster Vorsprünge (51) aufweist, die in Umfangsrichtung zusammenhängend sind, **dadurch gekennzeichnet,**
daß die Anzahl von Vorsprüngen eine Anzahl von zweiten Vorsprüngen (52) aufweist, die Diskontinuitäten in der Umfangsrichtung haben und die nebeneinander in der axial äuße-ren Richtung in einem vorgegebenen Abstand angeordnet sind, wobei die zweiten Vorsprünge in einem beliebigen Querschnitt und an Stellen angeordnet sind, die näher zu beiden Endabschnitten als die ersten Vorsprünge (51) liegen; und
daß der Durchmesser R eines Kreises, der die jeweiligen Spitzenabschnitte der zweiten Vorsprünge (52) entlang der Umfangsrichtung verbindet, so eingerichtet ist, daß er entweder gleich wie oder geringfügig größer als der Durchmesser r eines Kreises ist, der von den Spitzenabschnitten der ersten Vorsprünge (51) gebildet wird.

2. Auskleidung für Rohrverbindungen nach Anspruch 1, wobei die zweiten Vorsprünge (52) vorstehende Streifen sind, die sich in beliebigen Intervallen entlang der Umfangsrichtung diskontinuierlich erstrecken.

3. Auskleidung für Rohrverbindungen nach Anspruch 1, wobei die zweiten Vorsprünge (52) eine Anzahl vorstehender Streifen sind, die in einem beliebigen Intervall nebeneinander angeordnet sind und sich entlang einer axialen Richtung erstrecken.

4. Auskleidung für Rohrverbindungen nach Anspruch 1, wobei die zweiten Vorsprünge (52) eine Anzahl vorstehender Streifen sind, die in einem beliebigen Intervall unter einem vorgegebenen Winkel zu einer Achse nebeneinander angeordnet sind.

5. Auskleidung für Rohrverbindungen gemäß Anspruch 1, wobei die zweiten Vorsprünge (52) eine große Anzahl von Vorsprüngen sind, die entlang einer Außenrichtung punktförmig angeordnet sind.

6. Auskleidung für Rohrverbindungen nach Anspruch 1, wobei die miteinander zu verbindenden Rohre (2, 3) aus dem gleichen Material gemacht sind.

7. Auskleidung für Rohrverbindungen nach Anspruch 1, wobei der Innendurchmesser r1 des Mittelabschnitts der Auskleidung in einer Längsrichtung etwas kleiner als der Durchmesser r eines Kreises eingestellt ist, der von den Spitzenabschnitten der ersten Vorsprünge (51) und dem Durchmesser R eines Kreises gebildet ist, der die Spitzenabschnitte der zweiten Vorsprünge (52) entlang der Umfangsrichtung verbindet.

8. Auskleidung für Rohrverbindungen nach Anspruch 4, wobei die zweiten Vorsprünge (52) an einem Endabschnitt und der zweite Vorsprung (52) an dem anderen Endabschnitt in umgekehrter Winkelrichtung in bezug auf die Axialrichtung gebildet sind.

## Revendications

1. Douille pour raccord de tubes utilisant un alliage à mémoire de forme, du type qui comprend :
une paroi externe ayant la configuration d'un manchon de métal afin qu'elle soit continue, et
plusieurs saillies s'étendant vers les deux extrémités vers l'extérieur axialement, sauf dans la partie centrale (50), formées sur la surface interne de la paroi externe,
les saillies comprenant plusieurs premières saillies (51) qui sont continues en direction périphérique, caractérisée en ce que
les saillies comprennent plusieurs secondes saillies (52) ayant des discontinuités dans la direction périphérique et placées côte à côte vers l'extérieur dans la direction axiale avec un intervalle prédéterminé, les secondes saillies étant formées avec une section arbitraire et à des emplacements plus proches des deux parties d'extrémité que les premières saillies (51), et
le diamètre R d'un cercle reliant les parties mutuelles de bout des secondes saillies (52) dans la direction périphérique est réglé de manière qu'il soit égal ou légèrement supérieur au diamètre r d'un cercle formé par les parties de bout des premières saillies (51).

2. Douille pour raccord de tubes selon la revendication 1, dans laauelle les secondes saillies (52) sont des bandes en saillie qui présentent une discontinuité à des intervalles arbitraires dans la direction périphérique.

3. Douille pour raccord de tubes selon la revendication 1, dans laquelle les secondes saillies (52)sont formée par plusieurs bandes en saillie placées côte à côte avec des intervalles arbitraires et s'étendant dans une direction axiale.

4. Douille pour raccord de tubes selon la revendication 1, dans laquelle les secondes saillies (52) sont formées par plusieurs bandes en saillie placées côte à côte à des intervalles arbitraires et faisant un angle prédéterminé avec un axe.

5. Douille pour raccord de tubes selon la revendication 1, dans laquelle les secondes saillies (52) sont formées par un grand nombre de saillies ayant une faible dimension au moins en direction vers l'extérieur.

6. Douille pour raccord de tubes selon la revendication 1, dans laquelle les tubes (2, 3) qui doivent être raccordés sont formés du même matériau.

7. Douille pour raccord de tubes selon la revendication 1, dans laquelle le diamètre interne r1 de la partie centrale de la douille dans la direction longitudinale est réglé à une valeur légèrement inférieure au diamètre r d'un cercle formé par les parties de bout des premières saillies (51) et au diamètre R d'un cercle reliant les parties de bout des secondes saillies (52) dans la direction périphérique.

8. Douille pour raccord de tubes selon la revendication 4, dans laquelle la seconde saillie (52) formée à une première partie d'extrémité et la seconde saillie (52) formée à l'autre partie d'extrémité ont des directions inverses d'inclinaison par rapport à la direction axiale.
